# EUROPEAN PATENT APPLICATION

(11) **EP 4 606 617 A1**
(43) Date of publication of application: **27.08.2025**
(21) Application number: 25160337.9
(22) Date of filing: 26.02.2025
(51) Int. Cl.: B60K 11/08, B60K 11/06, B62D 35/00, B60K 5/00

(54) **AIR DUCTING SYSTEM**

(30) Priority: 26.02.2024 GB 202402700
(71) Applicant: McLaren Automotive Limited, Woking Surrey GU21 4YH (GB)
(72) Inventor: Panagakos, Vasileios, Woking GU21 4YH (GB); Algoo, Robin, Woking GU21 4YH (GB); Judge, Michael, Woking GU21 4YH (GB)
(74) Representative: Slingsby Partners LLP

(57) **Abstract**

A vehicle comprising: a vehicle body; a first duct running from a first inlet to a first outlet to permit air flowing into the first inlet to be channelled to the first outlet, the first inlet being positioned on the vehicle body so that, when the vehicle is in forward motion, air flows into the first inlet, the first outlet being configured to direct air flowing through the first outlet in an upwards direction; and a second duct running from an interior region of the vehicle to a second outlet, the second outlet being positioned relative to the first outlet on the vehicle body so that the upwards airflow causes disruption to a rearward airflow moving towards the second outlet when the vehicle is in forward motion.

## Description

This invention relates to a vehicle comprising first and second ducts positioned relative to each other.

A typical vehicle will contain many heat sources including the engine, if the vehicle is powered by an internal combustion engine, and/or electric motors and batteries if the vehicle is an electric or hybrid vehicle. The heat sources may also be, for instance, heat exchangers or other powertrain components such as exhaust systems. It is desirable for heat generated by these sources to be evacuated from the interior regions of the vehicle. These heat sources can heat air contained in the interior regions of the vehicle and thus it is desirable for this air to be permitted to flow out of the interior regions.

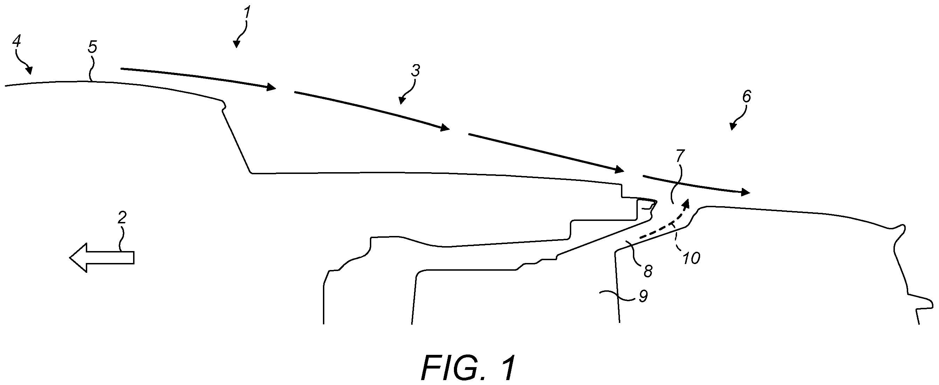

In certain aerodynamic circumstances, the aerodynamic conditions are not met for extraction of air to naturally occur. This can be particularly problematic when that interior air is being heated by heat sources as it can cause internal components, such as engines and motors, to overheat or transfer too much heat to vehicle body panels if that air cannot be evacuated and allowed to be replaced. An example of the airflow that can cause this situation is shown in figure 1. A portion of a vehicle 1 is shown in figure 1. Figure 1 shows a cut through view of the vehicle 1 along a longitudinal centreline of the vehicle 1. The vehicle 1 is in forward motion as indicated by arrow 2. The forward motion of the vehicle 1 causes a rearward airflow 3 to be generated which flows over the vehicle body 4. The rearward airflow 3 is a high energy airflow as it is generated directly from the motion of the vehicle 1 and flows relatively unimpeded over the exterior surface of the vehicle body 4. The rearward airflow 3 runs off of the vehicle roof 5 towards the back 6 of the vehicle 1. As the rearward airflow 3 runs off of the vehicle roof 5 the airflow 3 sinks downwards to rejoin the vehicle body 4 towards the back 6 of the vehicle 1. In this region, there is an outlet 7 from a duct 8 running from an interior region 9 of the vehicle 1. The interior region 9 pictured is a powertrain bay (which could be an engine bay). This duct 8 permits an airflow (shown by arrow 10) from the interior region 9 to the exterior of the vehicle 1. However, the high energy airflow 3 causes problems for the airflow 10 attempting to escape from the duct outlet 7. This is because the airflow 10 from the interior region 9 is of lower energy relative to the rearward airflow 3. This causes the airflow 10 to stagnate in the duct outlet 7 and so not effectively flow out of the duct 8. This can cause cooling problems when the vehicle is in motion and especially at high speeds. Cooling problems at high speeds are particularly problematic because this is when vehicle components will be working at their hardest and so generating the most heat.

Whilst figure 1 shows the duct outlet 7 being towards the rear of the vehicle 1, this problem could equally exist in other areas around the vehicle body 4 where a high energy airflow impedes a lower energy airflow from escaping from a vent.

It would therefore be desirable to have an improved way of permitting low energy airflows to vent from an interior region of the vehicle.

According to a first aspect of the present invention there is provided a vehicle comprising: a vehicle body; a first duct running from a first inlet to a first outlet to permit air flowing into the first inlet to be channelled to the first outlet, the first inlet being positioned on the vehicle body so that, when the vehicle is in forward motion, air flows into the first inlet, the first outlet being configured to direct air flowing through the first outlet in an upwards direction; and a second duct running from an interior region of the vehicle to a second outlet, the second outlet being positioned relative to the first outlet on the vehicle body so that the upwards airflow causes disruption to a rearward airflow moving towards the second outlet when the vehicle is in forward motion.

The first inlet may be oriented to channel a rearwardly moving airflow into the first duct. The first inlet may be positioned on the vehicle body to channel a rearwardly moving airflow into the duct that is at a higher energy relative to the interior region of the vehicle when the vehicle is in motion. The vehicle may comprise a passenger compartment and the first inlet may be positioned on a first side of the vehicle body rearwards of the passenger compartment.

The vehicle may comprise a third duct running from a third inlet to the first outlet to permit air flowing into the third inlet to be channelled to the first outlet, the third inlet may be positioned on the vehicle body so that, when the vehicle is in forward motion, air flows into the third inlet, the first and third inlets may be positioned on the vehicle body to either side of a longitudinal centreline of the vehicle. The third inlet may be oriented to channel a rearwardly moving airflow into the duct. The third inlet may be positioned on the vehicle body to channel a rearwardly moving airflow into the duct that is at a higher energy relative to the interior region of the vehicle when the vehicle is in motion. The vehicle may comprise a passenger compartment and the third inlet may be positioned on a second side of the vehicle body, opposite to the first side, rearwards of the passenger compartment.

The upwards airflow may cause disruption to the rearward airflow to generate a lower energy region over the second outlet with higher energy regions to either side on the vehicle body.

The first outlet may comprise a first region in which the first outlet is configured to direct air flowing through the first outlet in an upwards direction and the first outlet may comprise second regions to either side of the first region in which the first outlet is configured to direct air flowing through the first outlet in a rearwards direction over the vehicle body. The vehicle may comprise a flow diverter to impinge on air flowing through the first outlet in the first region to direct the airflow in an upwards direction. In the second regions the flow diverter may cause air flowing through the first outlet to flow to either side of the flow diverter so that air flowing through the first outlet moves in a rearward direction along the vehicle body. The flow diverter may be positioned along a first edge of the second outlet closest to the first outlet to impinge on air flowing through the first outlet in the first region. The flow diverter may be positioned to run along second edges of the second outlet running along longitudinal directions of the vehicle to direct air flowing through the first outlet in the second regions in a rearward direction along the vehicle body. The flow diverter may not impinge on a rearward airflow exiting the second outlet. The flow diverter may generate a lower energy area at the second outlet relative to a higher energy area located outside of the first outlet when the vehicle is in motion.

An air flow exiting the second outlet may be at a lower energy relative to the air flow exiting the first outlet when the vehicle is in motion. The second duct may run from an interior region of the vehicle to a second outlet to permit air flowing from the interior region to be channelled to the second outlet. The first outlet and the second outlet may be positioned along a longitudinal centreline of the vehicle. The interior region of the vehicle may be a powertrain bay.

The vehicle comprising: a passenger compartment; a retractable roof configured to move between a deployed configuration where the roof covers the occupant cabin and a retracted configuration; a housing configured to house the retractable roof when the roof is in the retracted configuration, the housing being positioned at least partially over the interior region; and a moveable cover configured to close the housing; wherein the first and second outlets are positioned above the housing. The first and second outlets may be positioned rearwards of the moveable cover. The first inlet may be positioned on the moveable cover. The third inlet may be positioned on the moveable cover.

According to a second aspect of the present invention there is provided a vehicle comprising: a vehicle body; a first duct running from a first inlet to a first outlet to permit air flowing into the first inlet to be channelled to the first outlet, the first inlet being positioned on the vehicle body so that, when the vehicle is in forward motion, air flows into the first inlet, the first outlet being configured to direct air flowing through the first outlet away from the vehicle body; and a second duct running from an interior region of the vehicle to a second outlet, the second outlet being positioned relative to the first outlet on the vehicle body so that the airflow from the first outlet causes disruption to an airflow moving towards the second outlet when the vehicle is in forward motion.

The first inlet may be oriented to channel a rearwardly moving airflow into the first duct. The first inlet may be positioned on the vehicle body to channel a rearwardly moving airflow into the duct that is at a higher energy relative to the interior region of the vehicle when the vehicle is in motion. The vehicle may comprise a passenger compartment and the first inlet may be positioned on a first side of the vehicle body rearwards of the passenger compartment. The vehicle may comprise a third duct running from a third inlet to the first outlet to permit air flowing into the third inlet to be channelled to the first outlet, the third inlet may be positioned on the vehicle body so that, when the vehicle is in forward motion, air flows into the third inlet, the first and third inlets being positioned on the vehicle body to either side of a longitudinal centreline of the vehicle.

The third inlet may be oriented to channel a rearwardly moving airflow into the duct. The third inlet may be positioned on the vehicle body to channel a rearwardly moving airflow into the duct that is at a higher energy relative to the interior region of the vehicle when the vehicle is in motion.

The vehicle may comprise a passenger compartment and the third inlet may be positioned on a second side of the vehicle body, opposite to the first side, rearwards of the passenger compartment. The airflow from the first outlet may cause disruption to the airflow moving towards the second outlet to generate a lower energy region over the second outlet with higher energy regions to either side on the vehicle body.

The first outlet may comprise a first region in which the first outlet is configured to direct air flowing through the first outlet in an upwards direction and the first outlet may comprise second regions to either side of the first region in which the first outlet is configured to direct air flowing through the first outlet in a rearwards direction over the vehicle body. The vehicle may comprise a flow diverter to impinge on air flowing through the first outlet in the first region to direct the airflow in an upwards direction. In the second regions the flow diverter may cause air flowing through the first outlet to flow to either side of the flow diverter so that air flowing through the first outlet moves in a rearward direction along the vehicle body. The flow diverter may be positioned along a first edge of the second outlet closest to the first outlet to impinge on air flowing through the first outlet in the first region. The flow diverter may be positioned to run along second edges of the second outlet running along longitudinal directions of the vehicle to direct air flowing through the first outlet in the second regions in a rearward direction along the vehicle body. The flow diverter may not impinge on a rearward airflow exiting the second outlet. The flow diverter may generate a lower energy area at the second outlet relative to a higher energy area located outside of the first outlet when the vehicle is in motion. An air flow exiting the second outlet may be at a lower energy relative to the air flow exiting the first outlet when the vehicle is in motion.

The second duct may run from an interior region of the vehicle to a second outlet to permit air flowing from the interior region to be channelled to the second outlet. The first outlet and the second outlet may be positioned along a longitudinal centreline of the vehicle. The interior region of the vehicle may be a powertrain bay.

The vehicle may comprise: a passenger compartment; a retractable roof configured to move between a deployed configuration where the roof covers the occupant cabin and a retracted configuration; a housing configured to house the retractable roof when the roof is in the retracted configuration, the housing may be positioned at least partially over the interior region; and a moveable cover configured to close the housing; wherein the first and second outlets may be positioned above the housing. The first and second outlets may be positioned rearwards of the moveable cover. The first inlet may be positioned on the moveable cover. The third inlet may be positioned on the moveable cover.

The present invention will now be described by way of example with reference to the accompanying drawings. In the drawings:
Figure 2 shows a schematic plan view of a vehicle.
Figure 3 shows a cut through view of the vehicle along the centre line of the vehicle.
Figure 4 shows a close up view of a rear portion of the vehicle.
Figure 5 shows a close up three quarters view of the rear portion of the vehicle.
Figure 6 shows a three quarters view of the side of the vehicle.
Figure 7 shows the vehicle having a retractable roof in its deployed configuration.
Figure 8 shows the vehicle having a retractable roof in its retracted configuration.

The following description is presented to enable any person skilled in the art to make and use the invention, and is provided in the context of a particular application. Various modifications to the disclosed embodiments will be readily apparent to those skilled in the art.

The general principles defined herein may be applied to other embodiments and applications without departing from the spirit and scope of the present invention. Thus, the present invention is not intended to be limited to the embodiments shown, but is to be accorded the widest scope consistent with the principles and features disclosed herein.

The present invention relates to a vehicle comprising a vehicle body, and a first duct running from a first inlet to a first outlet to permit air flowing into the first inlet to be channelled to the first outlet, the first inlet being positioned on the vehicle body so that, when the vehicle is in forward motion, air flows into the first inlet. The first outlet may be configured to direct air flowing through the first outlet in an upwards direction. The first outlet may be configured to direct air flowing through the first outlet away from the vehicle body. The vehicle also comprises a second duct running from an interior region of the vehicle to a second outlet. The second outlet may be positioned relative to the first outlet on the vehicle body so that the upwards airflow causes disruption to a rearward airflow moving towards the second outlet when the vehicle is in forward motion. The second outlet may be positioned relative to the first outlet on the vehicle body so that the airflow from the first outlet causes disruption to an airflow moving towards the second outlet when the vehicle is in forward motion.

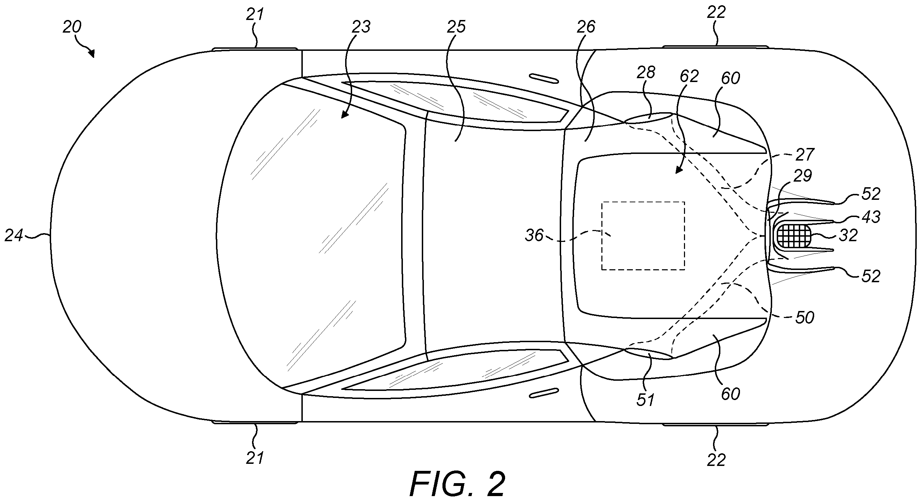

Figure 2 shows a vehicle 20. The vehicle 20 may be an automobile. The vehicle 20 may be a car. The vehicle 20 comprises front wheels 21 and rear wheels 22. The front of the vehicle is defined with reference to the primary motion direction of the vehicle 20. The front of the vehicle 20 points in the primary motion direction of the vehicle. Generally, a vehicle has a primary motion direction that is the forward direction. The vehicle 20 comprises an occupant compartment shown generally at 23. The occupant compartment 23 may comprise one or more seats for occupants of the vehicle to sit in. The occupant compartment may accommodate a driver. The occupant compartment may accommodate one or more passengers. The vehicle 20 may comprise controls located within the occupant compartment to enable an occupant to control the motion of the vehicle. The occupant compartment may also be known as a passenger compartment.

The vehicle comprises a vehicle body 24. The vehicle body 24 comprises a plurality of body panels. For example, the body panels may include bonnet panel(s), side door panel(s), and rear deck panel(s). The vehicle body 24 has an outer surface made up of the outer surface of the body panels. The outer surface of the vehicle body 24 defines the exterior surface of the vehicle 20.

The vehicle comprises a powertrain 36. The powertrain may comprise an internal combustion engine. The powertrain 36 may comprise one or more electrical machines that are capable of providing motive power to the drive wheels of the vehicle. The powertrain may comprise a gearbox and differential. At least some of the wheels may be coupled to the powertrain to receive motive power from the powertrain 36 and thus are drive wheels of the vehicle. The powertrain 36 may be connected to the rear wheels 22. It will be appreciated that the powertrain 36 could equally be connected to the front wheels 21 and/or both front and rear wheels 21, 22 of the vehicle 20.

As shown in figure 2, the powertrain 36 may be located in the middle or towards the rear of the vehicle. The powertrain 36 may be located behind the occupant compartment 23. The powertrain 36 may be located between the front and rear axles of the wheels 21, 22. The engine may be located between the front and rear axles of the wheels 21, 22. The vehicle 20 may be a mid-engine vehicle. The vehicle 20 may be a rear-engine vehicle. The vehicle 20 may be a front-engine vehicle. Other drive units which do not form part of powertrain 36 may be present in the vehicle 1. For instance, the vehicle 20 may comprise one or more electric motors which drive wheels of the vehicle 20 separately from the powertrain 36.

The vehicle 20 in figure 2 has a retractable roof 25. Figure 2 shows the retractable roof in its deployed configuration. The retractable roof 25 shown in figure 2 comprises a single roof element 25 that is moveable between a deployed configuration where the roof element 25 covers the occupant cabin 23 and a retracted configuration where the roof element 23 does not cover the occupant cabin 23. The retractable roof 25 may comprise multiple roof elements that together form the roof of the vehicle 20. These roof elements may be positioned next to one another to form the roof of the vehicle. The number and configuration of the roof elements is dependent on the size and shape of the occupant cabin 23 that needs to be covered by the retractable roof 25. The movement of the retractable roof 25 is controlled by one or more actuators that are coupled to the retractable roof 25 to permit movement of the roof element(s) between the deployed configuration and the retracted configuration. The actuators may be coupled to the retractable roof by one or more linkages. The actuators may be hydraulic and/or electric. The hard-top retractable roof may comprise all rigid roof members or may comprise some flexible roof members together with rigid roof members.

Alternatively, the retractable roof 25 may be a soft-top retractable roof. The retractable roof may comprise one or more flexible roof members that are supported by a frame. The frame may be moveable to permit the retractable roof to move between the deployed configuration and the retracted configuration. The frame may be coupled to one or more actuators to permit movement of the frame and thus the retractable roof.

The vehicle 20 comprises a moveable cover 26. The moveable cover 26 closes a housing so that when the retractable roof 25 is in the retracted configuration the retractable roof 25 is enclosed in a space defined by the housing and the underside of the movable cover 26. The moveable cover 26 may comprise seals to seal the moveable cover 26 to other body panels of the vehicle body 24 and/or to the housing.

The moveable cover 26 is configured to move between a closed configuration where the moveable cover closes a housing 70 and an open configuration where the moveable cover 26 can permit the retractable roof to move between the deployed configuration and the retracted configuration. In the open configuration the front of the moveable cover 26 is raised to permit access to the housing 70. The raising of the front of the moveable cover 26 permits the retractable roof 25 to move through the space located between the front of the moveable cover 26 and the rest of the vehicle body 24 so that it can move into and out of the housing 70.

The vehicle 20 comprises a first duct 27 running from a first inlet 28 to a first outlet 29. The first duct 27 permits air flowing from the first inlet 28 to be channelled to the first outlet 29. The first inlet 28 is positioned on the vehicle body 20 so that when the vehicle 20 is in forward motion air flows into the first inlet 28. The first inlet 28 may be positioned so that it faces in a forwards-facing direction. The first inlet 28 may be oriented to channel a rearwardly moving airflow into the first duct 27.

The first inlet 28 is positioned on a portion of the vehicle body 24 which has high energy air flowing over the vehicle body 24 when the vehicle is in motion. The high energy air may be high relative to low energy air that can be found at least one interior region of the vehicle 20. In this way, the first inlet 28 is positioned on a portion of the vehicle body 24 which has higher energy air flowing over the vehicle body 24 when the vehicle is in motion relative to lower energy air present within an interior region of the vehicle 20. The rearwardly moving airflow may be at a higher energy relative to an interior region of the vehicle 20. The energy of the airflow may be defined in relation to the pressure and/or momentum of the airflow. For instance, the airflow may have a higher pressure which means it has more energy and/or the airflow may have a higher momentum which means it has more energy. The pressure of the airflow may be lower but the momentum higher which overall means the airflow has higher energy. Equally the pressure of the airflow may be higher but the momentum lower but still means overall the airflow has higher energy.

The first inlet 28 is positioned on a portion of the vehicle body 24 which has air flowing over the vehicle body 24. The flow may be attached to the vehicle body 24 at the point it enters the first inlet 28.

The first outlet 29 permits the air flowing through the duct 27 to be output at a position remote from the first inlet 28. Thus, the first outlet 29 allows the air flow that is flowing over the vehicle body 20 in a first location 28 to be transferred to a second location 29 remote from the first location 28. The first outlet 29 is positioned in a region of the vehicle body 24 where assistance is required in evacuating air from an internal region of the vehicle 20.

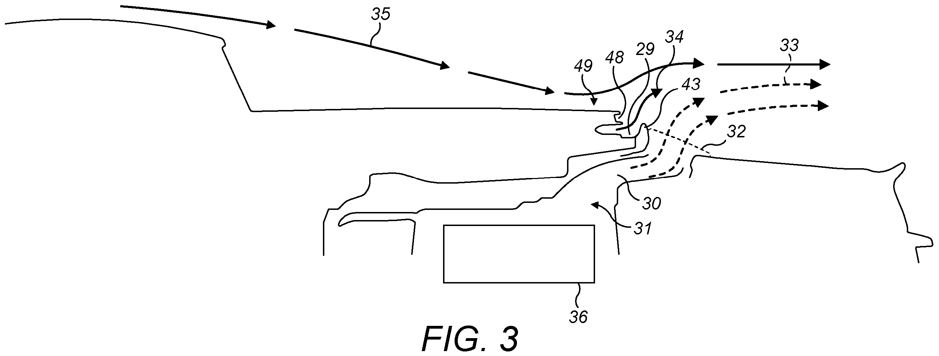

Figure 3 shows a cut through view of the vehicle 20. The cut though the vehicle shown in figure 3 is along the longitudinal centreline of the vehicle 20.

The vehicle comprises a second duct 30. The second duct 30 runs from an interior region 31 of the vehicle 20 to a second outlet 32. The second duct 30 may comprise a second inlet 31 at the interior region 31 of the vehicle 1. The second duct 30 permits air flowing from the interior region 31 to be channelled to the second outlet 32. The air flow 33 exiting the second outlet 32 may be at a lower energy relative to the air flow exiting the first outlet 29 when the vehicle 20 is in motion. The air flow 33 exiting the second outlet 32 may be at a lower energy relative to a rearward airflow moving over the vehicle body 24.

As shown in the figures, the second outlet 32 is positioned relative to the first outlet 29 so that the air flow exiting the first outlet 29 can interact with a rearwardly moving airflow moving towards the second outlet 32. The airflow exiting the first outlet 29 can disrupt this rearwardly moving airflow to provide lower impediment to airflow exiting the second outlet 32.

As best shown in figure 3, the first outlet 29 is configured to direct air flowing through the first outlet 29 in an upwards direction. This is as shown by flow line 34. This upwards airflow causes disruption to the rearward airflow 35 moving towards the second outlet when the vehicle is in forward motion. The upwards airflow 34 causes the rearward airflow 35 to move in an upwards direction. The upwards airflow 34 causes the rearward airflow 35 to move away from the second outlet 32. The upwards airflow 34 causes the rearward airflow 35 to move away from the second outlet 32 in the region of the second outlet 32.

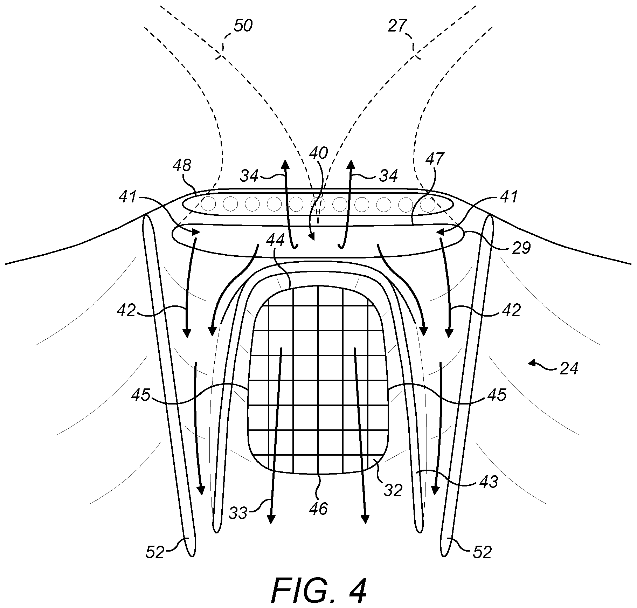

Figure 4 shows a rear view of the portion of the vehicle 20 which comprises the first and second outlets 29, 32. As can be seen in figure 4, the first outlet 29 comprises a first region 40 in which the first outlet 29 is configured to direct air flowing through the first outlet 29 in an upwards direction 34. The first outlet 29 comprises second regions 41 to either side of the first region 40 in which the first outlet 29 is configured to direct air flowing through the first outlet 29 in a rearwards direction 42 over the vehicle body 24. The second regions 41 of the first outlet 29 direct the air flowing through the first outlet 29 to either side of the second outlet 32. This is as shown by flow lines 42.

The configuration of the first outlet 29 to direct airflow in an upwards direction may be down to the shape of the first outlet 29. For instance, the first outlet 29 may be shaped to direct the airflow in an upwards direction. The first outlet 29 may have a scoop shaped form to direct the airflow in an upwards direction. The first outlet 29 may be oriented in an upward direction. The first outlet 29 may have this configuration in the first region 40.

The configuration of the first outlet 29 to direct airflow in a rearward direction over the vehicle body 24 may be down to the shape of the first outlet 29. For instance, the first outlet 29 may be shaped to direct the airflow in a rearward direction. The first outlet may have a generally flat planar shape to direct the airflow along the vehicle body 24. The first outlet may have this configuration in the second regions 41.

The configuration of the first outlet 29 may be due to the presence of a flow diverter 43. The vehicle 20 may comprise a flow diverter 43 as shown in figure 4. The flow diverter 43 is positioned on the vehicle body 24 to interact with air flowing out of the first outlet 29. In this way, the flow diverter 43 may configure the first outlet 29 to provide the required airflow.

The flow diverter 43 extends away from the vehicle body 24. The flow diverter 43 projects from the vehicle body 24. The flow diverter 43 may be formed from a body panel of the vehicle body 24. The flow diverter 43 is shaped to control the flow of air emanating from the first outlet 29.

The flow diverter 43 impinges on the air flowing through the first outlet 29 to direct the airflow in an upwards direction. The flow diverter 43 is positioned so that the flow diverter 43 channels air in an upward direction. The flow diverter 43 is positioned adjacent to the first outlet 29 in the first region 40. The flow diverter 43 impinges on air flowing through the first outlet 29 in the first region 40 to direct the airflow 34 in an upwards direction in the first region 40. The flow diverter 43 provides a projection at the first outlet 29 in the first region 40 which forces the airflow in an upwards direction. The flow diverter 43 extends across the first region 40.

The flow diverter 43 is positioned between the first outlet 29 and the second outlet 32. The flow diverter 43 is positioned along a first edge 44 of the second outlet 32 closest to the first outlet. The flow diverter 43 is positioned here to impinge on air flowing through the first outlet in the first region. The flow diverter 43 runs along the first edge 44 of the second outlet 32. The flow diverter 43 projects from the vehicle body 24 along the first edge 44. The flow diverter 43 is raised along the first edge 44 relative to the second outlet 32. The flow diverter 43 in effect provides a shelter to the air flow 33 flowing from the second outlet 32.

The flow diverter 43 is positioned to run along second edges 45 of the second outlet 32. The second edges 45 run away from the first outlet 29. The second edges 45 run along longitudinal directions of the vehicle 20. The flow diverter 43 runs along second edges 45 of the second outlet 32 to direct air flowing through the first outlet 29 in the second regions 41 in a rearward direction 42 along the vehicle body 24. The flow diverter 43 is U-shaped. The flow diverter 43 runs along three sides of the second outlet 32. The flow diverter 43 runs along the first edge 44 and the second edges 45 of the second outlet 32.

The height of the flow diverter 43 may reduce as it runs along the second edges 45 away from the first outlet 29. The flow diverter 43 may be at its highest projection at the first outlet 29 end of the second outlet 32. The flow diverter 43 may be at its lowest projection at the farthest from the first outlet 29. The flow diverter 43 may be at the level of the surrounding body panel farthest from the first outlet 29. The flow diverter 43 may have uniform height along the first edge 44.

The flow diverter 43 does not run along a fourth edge 46 of the second outlet 32. The flow diverter 43 may only run along the first and second edges of the second outlet 32. The flow diverter 43 may not impinge on a rearward airflow exiting the second outlet 32 in a rearward direction. The flow diverter 43 may contain the rearward airflow to the region surrounded by the flow diverter 43 whilst permitting the airflow to move rearwards.

The projection of the flow diverter 43 from the vehicle body 24 channels the airflow from the first outlet 29 in the second regions 41 around the second outlet 32. The projection stops the airflow from the first outlet 29 from flowing directly over the second outlet 32. The flow diverter 43 generates a lower air energy area at the second outlet relative to a higher air energy area located outside of the first outlet 29 when the vehicle is in motion. The flow diverter 43 shields the second outlet 32 from the air flow emanating from the first outlet 29.

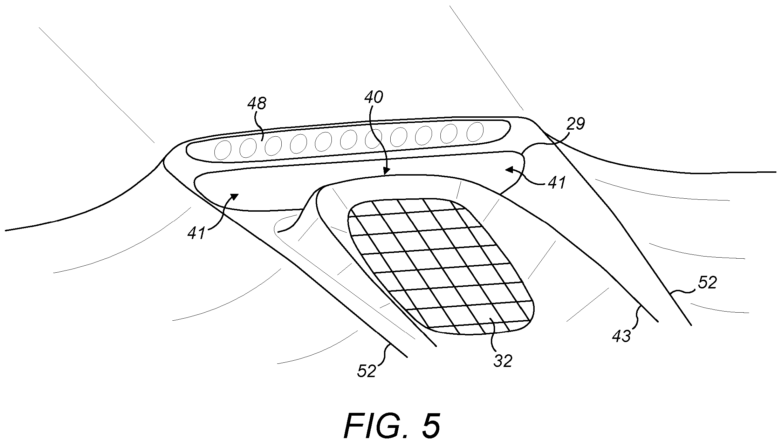

Figure 5 is a rear quarter view of the rear of the vehicle 20 in the region of the first and second outlets 29, 32. Figure 5 shows the projection of the flow diverter 43 from the vehicle body 24. The projection of the flow diverter 43 along the first edge of the second outlet 29 may extend upwards to the same level as the top edge 47 of the first outlet 29. Thus, the flow diverter 43 may obscure the first outlet 29 in the first region 40 when viewed from directly behind the vehicle 20. The first region 40 may run across at least the middle third of the first outlet 29.

As shown in figure 5, the second outlet 32 may be angled towards the rear of the vehicle 20. The second outlet 32 may face partially towards the rear of the vehicle 20. In this way, the airflow from the second outlet 32 may be directed towards the rear of the vehicle 20.

The vehicle 20 may comprise a centre high-mounted stop light 48 (CHMSL). The CHMSL 48 is positioned above the first outlet 29. The CHSML 48 may run along the upper edge of the first outlet 29.

The first outlet 29 is positioned towards the rear of the vehicle so that there is an area 49 of vehicle body forward of the first outlet 29. When the vehicle is in forward motion, a rearwardly moving airflow 35 contacts the area 49 of the vehicle body forward of the first outlet 29. The contact of this airflow on to the area causes the rearwardly moving airflow to flatten its path and run towards the rear of the vehicle rather than continuing to fall towards the second outlet 32. This contact enhances the disruption provided by the first outlet 29 as the rearwardly moving airflow 35 has already been flattened somewhat in its flow path.

The vehicle 20 comprises a third duct 50 running from a third inlet 51 to the first outlet 29. The third duct 50 permits air flowing from the third inlet 51 to be channelled to the first outlet 29. The third inlet 51 is positioned on the vehicle body 20 so that when the vehicle is in forward motion air flows into the third inlet 51. The third inlet 51 may be positioned so that it faces in a forwards-facing direction. The third inlet 51 may be oriented to channel a rearwardly moving airflow into the third duct 50.

The third inlet 51 is positioned on a portion of the vehicle body 24 which has high energy air flowing over the vehicle body 24 when the vehicle is in motion. The high energy air may be high relative to low energy air that can be found at least one interior region of the vehicle 20. In this way, the third inlet 51 is positioned on a portion of the vehicle body 24 which has higher energy air flowing over the vehicle body 24 when the vehicle is in motion relative to lower energy air present within an interior region of the vehicle 20. The rearwardly moving airflow may be at a higher energy relative to an interior region of the vehicle 20. The third inlet 51 is positioned on a portion of the vehicle body 24 which has air flowing over the vehicle body 24. The flow may be attached to the vehicle body 24 at the point it enters the third inlet 51.

The first inlet 28 may be positioned to a first side of the vehicle body 24. The first inlet 28 may be positioned on a first side of the vehicle body 24 rearwards of the passenger compartment 23. The third inlet 51 may be positioned to a second side of the vehicle body 24. The third inlet 51 may be positioned on a second side of the vehicle body 24 rearwards of the passenger compartment 23. The first and thirds inlets 51 may be positioned in like positions on either side of the vehicle 20. The first and third inlets 28, 51 may be positioned either side of a longitudinal centreline of the vehicle 20.

The first and third ducts 27, 50 converge to supply their respective airflows to the first outlet 29. The first and third ducts 27, 50 may converge at the first outlet 29. Alternatively, the first and third ducts 27, 50 may converge a point before the first outlet 29 and continue as one joint duct to the first outlet 29.

The vehicle body 20 may comprise a raised profile 52 to either side of the flow diverter 43. The raised profile 52 is spaced from the parts of the flow diverter that run along the second sides 45 of the second outlet 32. The raised profile 52 contains the airflow 42 from the second regions 41 of the first outlet 29. The raised profile 52 directs the airflow 42 from the second regions 41 of the first outlet 29 in a rearwards direction. The airflow 42 contains the airflow 33 exiting the second outlet 32 so that the airflow exiting the second outlet 32 runs in a rearward direction. The airflow 33 exiting the second outlet 32 may be at a higher temperature than the airflow 42 from the second regions 41 of the first outlet 29. Thus, the airflow 42 from the second regions 41 of the first outlet 29 provides a lower temperature buffer to either side of the airflow 33 form the second outlet 32. This effect may protect body panels of the vehicle 20 from excessive temperatures.

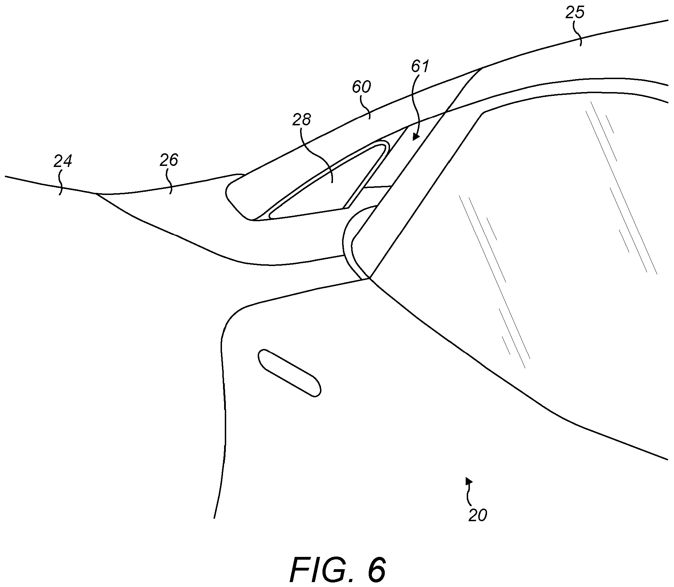

Figure 6 shows a front three-quarters view of part of the side of the vehicle 20. The vehicle 20 comprises a projection 60 from the body 24 of the vehicle 20. The projection 60 runs from the vehicle body 24 to the roof 25 of the vehicle 20. There is a space 61 running between the projection 60 and the rear of the passenger compartment 23. A rearwardly moving airflow can flow through the space 61 towards the rear deck 62 of the vehicle 20. The moveable cover 26 comprises the projection 60. The vehicle 20 comprises first and second projections 60 on either side of the vehicle 20. The moveable cover 26 comprises the first and second projections 60.

As shown in figure 6, the first inlet 28 is positioned on the first projection 60. The third inlet 51 is positioned on the second projection 60. The first and third inlets 28, 51 are oriented in a forward direction on a forward surface of their respective projections 60. This positioning is particularly advantageous because high energy rearwardly moving airflow is directed at these projections 60.

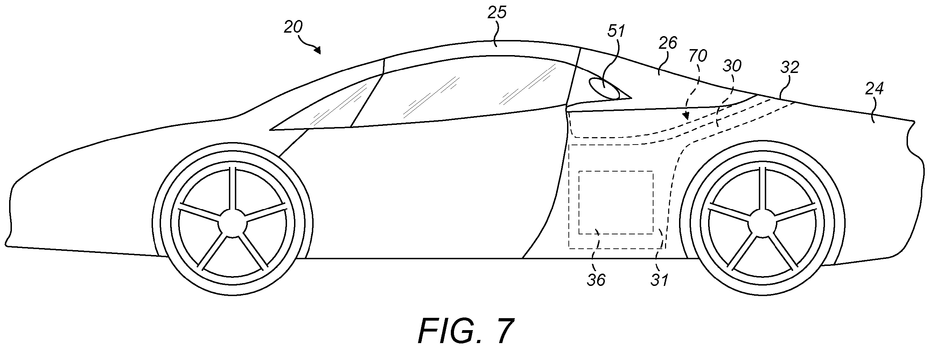

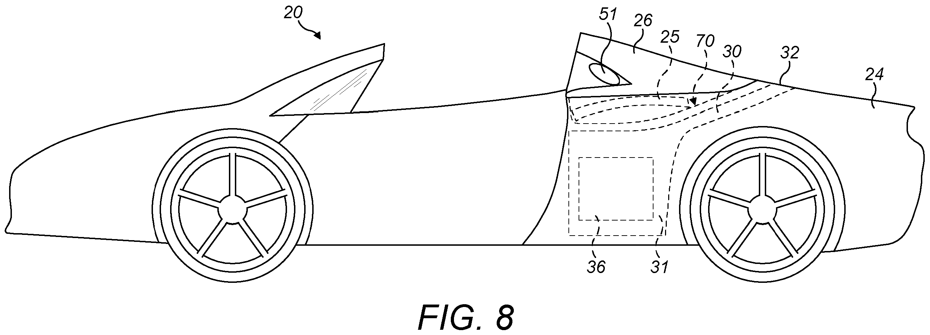

Figures 7 and 8 show the vehicle 20 with a retractable roof 25 in more detail. Figure 7 shows the retractable roof 25 in its deployed configuration. Figure 8 shows the retractable roof 25 in its retracted position. The retractable roof 25 is configured to move between a deployed configuration as shown in figure 7 and a retracted configuration as shown in figure 8. The retractable roof 25 may be a hard-top retractable roof 25 as shown in figure 8.

The vehicle 20 comprises a housing 70 that is configured to house the retractable roof when the roof is in the retracted configuration. It is shown schematically in figures 7 and 8 because it is located within the vehicle body 24 and beneath moveable cover 26. Housing 70 may be a discrete housing and/or may be formed from body panels of the vehicle body 24 that also serve another purpose. For instance, as shown in figures 7 and 8 covering an engine bay. Figure 8 shows the retractable roof in its retracted configuration as shown by the schematic representation of the retractable roof located within housing 70. The housing 70 may be shaped to receive the retractable roof. The housing 70 may be sized so as to accommodate the retractable roof element(s) together with the associated linkages and actuators.

The interaction between the first outlet and the second outlet is advantageous because the first outlet provides a region of lower pressure at the second outlet which permits the lower energy airflow to escape from the second outlet. This improves cooling from the interior region 31 of the vehicle 20. This is especially important when the interior region 31 comprises a powertrain 36. It will be appreciated that whilst the description has focussed on the first and second outlets 29, 32 being positioned towards the rear of the vehicle 20 those outlets could be positioned on another part of the vehicle 20 where a high energy airflow is likely to cause a low energy airflow to not escape properly from the interior of the vehicle 20. It will also be appreciated that there may be only one inlet or more than two inlets depending on the airflow required at the first outlet 29. It will additionally be appreciated that whilst the description has focussed on the first and third inlets 28, 51 being positioned towards the rear of the vehicle 20 those inlet(s) could be positioned on another part of the vehicle 20.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

### ANNEX TO THE DESCRIPTION

1. A vehicle comprising:
   a vehicle body;
   a first duct running from a first inlet to a first outlet to permit air flowing into the first inlet to be channelled to the first outlet, the first inlet being positioned on the vehicle body so that, when the vehicle is in forward motion, air flows into the first inlet, the first outlet being configured to direct air flowing through the first outlet in an upwards direction; and
   a second duct running from an interior region of the vehicle to a second outlet, the second outlet being positioned relative to the first outlet on the vehicle body so that the upwards airflow causes disruption to a rearward airflow moving towards the second outlet when the vehicle is in forward motion.
2. A vehicle according to 1, wherein the first inlet is oriented to channel a rearwardly moving airflow into the first duct.
3. A vehicle according to 1 or 2, wherein the first inlet is positioned on the vehicle body to channel a rearwardly moving airflow into the duct that is at a higher energy relative to the interior region of the vehicle when the vehicle is in motion.
4. A vehicle according to any of 1 to 3, wherein the vehicle comprises a passenger compartment and the first inlet is positioned on a first side of the vehicle body rearwards of the passenger compartment.
5. A vehicle according to any of 1 to 4, the vehicle comprising a third duct running from a third inlet to the first outlet to permit air flowing into the third inlet to be channelled to the first outlet, the third inlet being positioned on the vehicle body so that, when the vehicle is in forward motion, air flows into the third inlet, the first and third inlets being positioned on the vehicle body to either side of a longitudinal centreline of the vehicle.
6. A vehicle according to 5, the third inlet is oriented to channel a rearwardly moving airflow into the duct.
7. A vehicle according to 5 or 6, wherein the third inlet is positioned on the vehicle body to channel a rearwardly moving airflow into the duct that is at a higher energy relative to the interior region of the vehicle when the vehicle is in motion.
8. A vehicle according to any of 5 to 7, wherein the vehicle comprises a passenger compartment and the third inlet is positioned on a second side of the vehicle body, opposite to the first side, rearwards of the passenger compartment.
9. A vehicle according to any of 1 to 8, wherein the upwards airflow causes disruption to the rearward airflow to generate a lower energy region over the second outlet with higher energy regions to either side on the vehicle body.
10. A vehicle according to any of 1 to 9, wherein the first outlet comprises a first region in which the first outlet is configured to direct air flowing through the first outlet in an upwards direction and the first outlet comprises second regions to either side of the first region in which the first outlet is configured to direct air flowing through the first outlet in a rearwards direction over the vehicle body.
11. A vehicle according to 10, wherein the vehicle comprises a flow diverter to impinge on air flowing through the first outlet in the first region to direct the airflow in an upwards direction.
12. A vehicle according to 11, wherein in the second regions the flow diverter causes air flowing through the first outlet to flow to either side of the flow diverter so that air flowing through the first outlet moves in a rearward direction along the vehicle body.
13. A vehicle according to any of 11 to 12, wherein the flow diverter is positioned along a first edge of the second outlet closest to the first outlet to impinge on air flowing through the first outlet in the first region.
14. A vehicle according to 13, wherein the flow diverter is positioned to run along second edges of the second outlet running along longitudinal directions of the vehicle to direct air flowing through the first outlet in the second regions in a rearward direction along the vehicle body.
15. A vehicle according to any of 10 to 14, wherein the flow diverter does not impinge on a rearward airflow exiting the second outlet.
16. A vehicle according to any of 10 to 15, wherein the flow diverter generates a lower energy area at the second outlet relative to a higher energy area located outside of the first outlet when the vehicle is in motion.
17. A vehicle according to any of 1 to 16, wherein an air flow exiting the second outlet is at a lower energy relative to the air flow exiting the first outlet when the vehicle is in motion.
18. A vehicle according to any of 1 to 17, wherein the second duct runs from an interior region of the vehicle to a second outlet to permit air flowing from the interior region to be channelled to the second outlet.
19. A vehicle according to any of 1 to 18, wherein the first outlet and the second outlet are positioned along a longitudinal centreline of the vehicle.
20. A vehicle according to any of 1 to 19, wherein the interior region of the vehicle is a powertrain bay.
21. A vehicle according to any of 1 to 20, the vehicle comprising:
   a passenger compartment;
   a retractable roof configured to move between a deployed configuration where the roof covers the occupant cabin and a retracted configuration;
   a housing configured to house the retractable roof when the roof is in the retracted configuration, the housing being positioned at least partially over the interior region; and
   a moveable cover configured to close the housing;
   wherein the first and second outlets are positioned above the housing.
22. A vehicle according to 21, wherein the first and second outlets are positioned rearwards of the moveable cover.
23. A vehicle according to 21 or 22, wherein the first inlet is positioned on the moveable cover.
24. A vehicle according to any of 21 to 23 as dependent on any of 5 to 8, wherein the third inlet is positioned on the moveable cover.
25. A vehicle comprising:
   a vehicle body;
   a first duct running from a first inlet to a first outlet to permit air flowing into the first inlet to be channelled to the first outlet, the first inlet being positioned on the vehicle body so that, when the vehicle is in forward motion, air flows into the first inlet, the first outlet being configured to direct air flowing through the first outlet away from the vehicle body; and
   a second duct running from an interior region of the vehicle to a second outlet, the second outlet being positioned relative to the first outlet on the vehicle body so that the airflow from the first outlet causes disruption to an airflow moving towards the second outlet when the vehicle is in forward motion.
26. A vehicle according to 25, wherein the first inlet is oriented to channel a rearwardly moving airflow into the first duct.
27. A vehicle according to 25 or 26, wherein the first inlet is positioned on the vehicle body to channel a rearwardly moving airflow into the duct that is at a higher energy relative to the interior region of the vehicle when the vehicle is in motion.
28. A vehicle according to any of 25 to 27, wherein the vehicle comprises a passenger compartment and the first inlet is positioned on a first side of the vehicle body rearwards of the passenger compartment.
29. A vehicle according to any of 25 to 28, the vehicle comprising a third duct running from a third inlet to the first outlet to permit air flowing into the third inlet to be channelled to the first outlet, the third inlet being positioned on the vehicle body so that, when the vehicle is in forward motion, air flows into the third inlet, the first and third inlets being positioned on the vehicle body to either side of a longitudinal centreline of the vehicle.
30. A vehicle according to 29, the third inlet is oriented to channel a rearwardly moving airflow into the duct.
31. A vehicle according to 29 or 30, wherein the third inlet is positioned on the vehicle body to channel a rearwardly moving airflow into the duct that is at a higher energy relative to the interior region of the vehicle when the vehicle is in motion.
32. A vehicle according to any of 29 to 31, wherein the vehicle comprises a passenger compartment and the third inlet is positioned on a second side of the vehicle body, opposite to the first side, rearwards of the passenger compartment.
33. A vehicle according to any of 25 to 32, wherein the airflow from the first outlet causes disruption to the airflow moving towards the second outlet to generate a lower energy region over the second outlet with higher energy regions to either side on the vehicle body.
34. A vehicle according to any of 25 to 33, wherein the first outlet comprises a first region in which the first outlet is configured to direct air flowing through the first outlet in an upwards direction and the first outlet comprises second regions to either side of the first region in which the first outlet is configured to direct air flowing through the first outlet in a rearwards direction over the vehicle body.
35. A vehicle according to 34, wherein the vehicle comprises a flow diverter to impinge on air flowing through the first outlet in the first region to direct the airflow in an upwards direction.
36. A vehicle according to 35, wherein in the second regions the flow diverter causes air flowing through the first outlet to flow to either side of the flow diverter so that air flowing through the first outlet moves in a rearward direction along the vehicle body.
37. A vehicle according to any of 35 to 36, wherein the flow diverter is positioned along a first edge of the second outlet closest to the first outlet to impinge on air flowing through the first outlet in the first region.
38. A vehicle according to 37, wherein the flow diverter is positioned to run along second edges of the second outlet running along longitudinal directions of the vehicle to direct air flowing through the first outlet in the second regions in a rearward direction along the vehicle body.
39. A vehicle according to any of 34 to 38, wherein the flow diverter does not impinge on a rearward airflow exiting the second outlet.
40. A vehicle according to any of 34 to 39, wherein the flow diverter generates a lower energy area at the second outlet relative to a higher energy area located outside of the first outlet when the vehicle is in motion.
41. A vehicle according to any of 25 to 40, wherein an air flow exiting the second outlet is at a lower energy relative to the air flow exiting the first outlet when the vehicle is in motion.
42. A vehicle according to any of 25 to 41, wherein the second duct runs from an interior region of the vehicle to a second outlet to permit air flowing from the interior region to be channelled to the second outlet.
43. A vehicle according to any of 25 to 42, wherein the first outlet and the second outlet are positioned along a longitudinal centreline of the vehicle.
44. A vehicle according to any of 25 to 43, wherein the interior region of the vehicle is a powertrain bay.
45. A vehicle according to any of 25 to 44, the vehicle comprising:
   a passenger compartment;
   a retractable roof configured to move between a deployed configuration where the roof covers the occupant cabin and a retracted configuration;
   a housing configured to house the retractable roof when the roof is in the retracted configuration, the housing being positioned at least partially over the interior region; and
   a moveable cover configured to close the housing;
   wherein the first and second outlets are positioned above the housing.
46. A vehicle according to 45, wherein the first and second outlets are positioned rearwards of the moveable cover.
47. A vehicle according to 45 or 46, wherein the first inlet is positioned on the moveable cover.
48. A vehicle according to any of 45 to 47 as dependent on any of 29 to 32, wherein the third inlet is positioned on the moveable cover.

## Claims

1. A vehicle comprising:
a vehicle body;
a first duct running from a first inlet to a first outlet to permit air flowing into the first inlet to be channelled to the first outlet, the first inlet being positioned on the vehicle body so that, when the vehicle is in forward motion, air flows into the first inlet, the first outlet being configured to direct air flowing through the first outlet in an upwards direction; and
a second duct running from an interior region of the vehicle to a second outlet, the second outlet being positioned relative to the first outlet on the vehicle body so that the upwards airflow causes disruption to a rearward airflow moving towards the second outlet when the vehicle is in forward motion.

2. A vehicle according to claim 1, wherein the first inlet is oriented to channel a rearwardly moving airflow into the first duct, and optionally the first inlet is positioned on the vehicle body to channel a rearwardly moving airflow into the duct that is at a higher energy relative to the interior region of the vehicle when the vehicle is in motion.

3. A vehicle according to any preceding claim, wherein the vehicle comprises a passenger compartment and the first inlet is positioned on a first side of the vehicle body rearwards of the passenger compartment.

4. A vehicle according to any preceding claim, the vehicle comprising a third duct running from a third inlet to the first outlet to permit air flowing into the third inlet to be channelled to the first outlet, the third inlet being positioned on the vehicle body so that, when the vehicle is in forward motion, air flows into the third inlet, the first and third inlets being positioned on the vehicle body to either side of a longitudinal centreline of the vehicle;
wherein the third inlet is oriented to channel a rearwardly moving airflow into the duct;
wherein the third inlet is positioned on the vehicle body to channel a rearwardly moving airflow into the duct that is at a higher energy relative to the interior region of the vehicle when the vehicle is in motion; and
wherein the vehicle comprises a passenger compartment and the third inlet is positioned on a second side of the vehicle body, opposite to the first side, rearwards of the passenger compartment.

5. A vehicle according to any preceding claim, wherein the upwards airflow causes disruption to the rearward airflow to generate a lower energy region over the second outlet with higher energy regions to either side on the vehicle body.

6. A vehicle according to any preceding claim, wherein the first outlet comprises a first region in which the first outlet is configured to direct air flowing through the first outlet in an upwards direction and the first outlet comprises second regions to either side of the first region in which the first outlet is configured to direct air flowing through the first outlet in a rearwards direction over the vehicle body;
wherein the vehicle comprises a flow diverter to impinge on air flowing through the first outlet in the first region to direct the airflow in an upwards direction;
wherein in the second regions the flow diverter causes air flowing through the first outlet to flow to either side of the flow diverter so that air flowing through the first outlet moves in a rearward direction along the vehicle body.

7. A vehicle according to claim 6, wherein the flow diverter is positioned along a first edge of the second outlet closest to the first outlet to impinge on air flowing through the first outlet in the first region; and
wherein the flow diverter is positioned to run along second edges of the second outlet running along longitudinal directions of the vehicle to direct air flowing through the first outlet in the second regions in a rearward direction along the vehicle body.

8. A vehicle according to claims 6 or 7, wherein the flow diverter does not impinge on a rearward airflow exiting the second outlet.

9. A vehicle according to any of claims 6 to 8, wherein the flow diverter generates a lower energy area at the second outlet relative to a higher energy area located outside of the first outlet when the vehicle is in motion.

10. A vehicle according to any preceding claim, wherein an air flow exiting the second outlet is at a lower energy relative to the air flow exiting the first outlet when the vehicle is in motion.

11. A vehicle according to any preceding claim, wherein the second duct runs from an interior region of the vehicle to a second outlet to permit air flowing from the interior region to be channelled to the second outlet.

12. A vehicle according to any preceding claim, wherein the first outlet and the second outlet are positioned along a longitudinal centreline of the vehicle.

13. A vehicle according to any preceding claim, wherein the interior region of the vehicle is a powertrain bay.

14. A vehicle according to any preceding claim, the vehicle comprising:
a passenger compartment;
a retractable roof configured to move between a deployed configuration where the roof covers the occupant cabin and a retracted configuration;
a housing configured to house the retractable roof when the roof is in the retracted configuration, the housing being positioned at least partially over the interior region; and
a moveable cover configured to close the housing;
wherein the first and second outlets are positioned above the housing and the first and second outlets are positioned rearwards of the moveable cover.

15. A vehicle according to claim 14 as dependent on claim 4, wherein the first inlet is positioned on the moveable cover and the third inlet is positioned on the moveable cover.
